Europäisches Patentamt

(19) European Patent Office

Office européen des brevets

(11) Publication number: **0 246 914**
**B1**

## EUROPEAN PATENT SPECIFICATION

(45) Date of publication of the patent specification: **11.04.90**

(21) Application number: **87304577.7**

(22) Date of filing: **22.05.87**

(51) Int. Cl.⁴: **B64C 21/10, B63B 1/34**

(54) Control of fluid flow.

(30) Priority: **22.05.86 GB 8612485**
**19.03.87 GB 8706554**

(43) Date of publication of application:
**25.11.87 Bulletin 87/48**

(45) Publication of the grant of the patent:
**11.04.90 Bulletin 90/15**

(84) Designated Contracting States:
**DE FR GB SE**

(56) References cited:
**EP-A- 0 205 289**
**EP-A- 0 216 384**

**AIAA'83 - AIAA 21st AEROSPACE SCIENCES MEETING, Reno, Nevada, 10th-13th January 1983, pages 6,18, American Institute of Aeronautics and Astronautics, New York, US; D.M. BUSHNELL: "AIAA-83-0227 - Turbulent drag reduction for external flows" MECHANICAL ENGINEERING, vol. 103, no. 3, March 1981, page 71, New York, US; "Grooves reduce aircraft drag"**

(73) Proprietor: **ROLLS-ROYCE plc, 65 Buckingham Gate, London, SW1E 6AT(GB)**

(72) Inventor: **Savill, Anthony Mark, 46 Histon Road, Cambridge(GB)**

(74) Representative: **Dargavel, Laurence Peter, Rolls-Royce plc Patents Department P.O. Box 31 Moor Lane, Derby DE2 8BJ(GB)**

## Description

This invention is concerned with the modification of turbulent boundary layer flows over aerodynamic and hydrodynamic surfaces.

There have been many investigations in recent years of the effects that small-geometry surface configurations can have on turbulent boundary layers. Particular attention has been paid to the provision of so-called riblet surfaces in which an array of small longitudinal ribs extend over the turbulent boundary layer region of a surface in the direction of fluid over the surface, and experimental results indicate that net or surface drag reductions of up to about 7% can be achieved.

In a paper "Drag Characteristics of V-Groove and Transverse Curvature Riblets" (presented by M.J. Walsh at the Symposium on Viscous Drag Reduction, Dallas, Texas, November 7–8, 1979) reference is made to an early investigation (1966) by Liu, Line, and Johnston in which drag reductions of 3–4% were obtained by reducing the turbulent bursting rate (i.e. the rate of break-up of the low speed longitudinal vortices or "streaks" that are characteristically formed in a turbulent boundary layer flow close to a wall) by employing rectangular fins. Walsh's paper reports the investigation of a number of alternative rib profiles and states that he was able to obtain a maximum drag reduction of 7% using V-groove riblets, this representing substantially the greatest reduction of skin friction drag that experimetners have been able to obtain up to the present,although D.M. Bushnell, in a paper AIAA-83-0227 "Turbulent Drag Reduction for External Flows" (AIAA 21st Aerospace Sciences Meeting, January 10–13, 1983), claimed that net drag reductions of up to 10% had been obtained on v-groove riblet surfaces, among a variety of different profiles tested. The same author refers to creation of a highly viscous sub-region in the transverse direction which alters the formation and growth/bursting of the streaks, and notes work indicating that the streaks tend to align themselves over the riblets, at least in the range of spacing greater than 50 wall units.

The drag reduction may be associated with the ability of the riblets to limit random spanwise movements of the streaks, as has been suggested by a number of sources, e.g. R.E. Falco (AIAA-83-0377, AIAA 21st Aerospace Sciences Meeting, January 10–13 1983, Reno, Nevada). Johansen and Smith (AIAA-85-0547, AIAA-Shear Flow Control Conference, March 12–14, 1985, Boulder, Colarado) have shown that cylindrical riblets of a smaller height than the V-groove riblets with which Walsh obtained his optimum results, have the effect of anchorig and/or creating sites of Jow-speed streaks in a limited region above the wall surface, but their experiments also showed drag increases of 3% to 8%. More recently, S.P. Wilkinson (abstract of paper read at "Drag Reduction and Boundary Layer Control Symposium", 22–25 October 1985 at the National Academy of Sciences, Washington D.C.) has attempted to follow Johansen and Smith by using blade riblets to anchor or create lowspeed streaks by the use of riblets and then use V-groove riblets between the streak anchors to control bursting, but it is not yet reported whether a net drag reduction has been achieved thereby.

The results reported from these and other previous investigations all show the effect of riblets is rather limited, and that has led to the search for alternative solutions.

It has been proposed (U.S. patent application 686 959 of M.J. Walsh et al – NASA Case LAR-13286-1) to reduce skin friction more effectively by providing a riblet surface with superimposed large-eddy break-up devices (LEBU's) as manipulators for the outer region of the boundary layer but such an arrangement adds considerable complexity and is susceptible to wear and especially accidental damage. In another proposal ("On the Drag Reduction of the Shark Skin", Bechert, Hoppe and Reif, AIAA-85-0546) it has been suggested that it may be appropriate to use so-called vortex generator surfaces which are configured so as to produce tangential mixing using local flow conditions over a ridge-pattern structure analogous to the configuration of scales on a shark's skin. It is claimed that this could lead to greater drag reduction, but it would also be inherently complicated and difficult to build up a simulation of the scaly surface that the investigators have concluded is responsible for the low drag characteristic.

In contrast to these attempts to reduce skin friction by rather complex means, riblet surfaces are less susceptible to damage and they can be formed relatively straightforwardly, e.g. by machining or pressing or by the application of a preformed, e.g. extruded, layer. It would clearly be preferable to employ such surfaces if they were able to give greater reductions of skin friction drag.

The mechanisms by which riblets influence the turbulent boundary layer over a wall is not yet fully understood. If it can be postulated that they bring a turbulent flow closer to laminar flow conditions their efficiency is low, bearing in mind that in equivalent turbulent and laminar flow regions the skin friction drag with laminar flow would be 80% less than that with turbulent flow. If a more significant proportion of this potential improvement could be achieved, the use of riblet surfaces could offer marked advantages over the complex drag reduction systems described above.

According to the present invention, there is provided an aerodynamic or hydrodynamic wall surface which is provided with a series of elongate projections extending in the direction of fluid flow relative to the surface for modification of turbulent boundary layer on said surface, said projections comprising spaced larger height projections between each successive pair of which are plurality of smaller height projections.

The projections preferably form a substantially continuous spanwise array. It is also preferred to form both the larger and smaller projections with sharp-peaked profiles.

The smaller height projections of a configuration according to the present invention correspond to the riblets of recent researchers. They function to inhibit turbulent eddy motions in the boundary layer from penetrating to all parts of the surface, in particular deep into the grooves defined by adjacent riblets, resulting in a displacement of the turbulent motion away from the wall. Depending upon their profile, they may also have some effect in inhibiting the spanwise gradients associated with the formation of the longitudinal vortices or "streaks" in the boundary layer and initiating secondary, smaller-scale longitudinal eddies which take energy from the larger scale streaks. Such riblets however, have hitherto only shown limited results, and it seems that this is because they have functioned wholly or primarily in a passive manner with little influence on the evolution of the eddies themselves. In that case they are largely unable to moderate the mixing and momentum transfer that the eddies encourage and that is the major factor in the increase of boundary layer drag of turbulent flow in comparison with laminar flow.

If, however, in accordance with the present invention the larger height projections are provided as, preferably individual, riblets set at appropriate intervals between series of smaller height riblets, the longitudinal vortices or streaks, which otherwise shift in random manner transversely across the surface, can not only be constrained laterally but can be moved further apart than their natural spacing. By increasing the disparity between the spanwise scale of the streaks and that of the smaller riblets, the larger riblets can promote a more rapid energy transfer from the streaks to the smaller-scale secondary vortices that these smaler riblets induce, and they can produce effects that permeate to the region above the smaller riblets and so improve the effectiveness of these riblets in that these reduce eddy activity there. In this sense both the larger and smaller riblets are able to function in an active manner.

In a preferred configuration according to the present invention, at least the larger height projections have side faces that are inclined at an angle that varies over the height of the projections, each said side face having an intermediate region at a lesser steepness than the adjacent regions above and below said region and forming the lower part of a concave profile peak of the associated projection.

For best effect the transition to the concave-sidedpeaks should be positioned at or close to the virtual wall height established by the projections. The region below the transition preferably has substantially planar faces so as to form a series of steep-sided V-grooves between the projections in their lowest reaches. These can act in the manner already described to displace the turbulent motion away from the wall surface. The longitudinal vortices displaced above the virtual wall surface are then controlled by the concave peaks projecting into this region which, by virtue of their different profile, can act more strongly on the vortices.

The transition to the concave profile may be substantially sharp-edged, but it is also possible to have a radiussed or chamfered transition. The concave faces are preferably continuously curved to a relatively sharp-edged tip but it is also possible to build them up from a group of straight and/or curved sections and for convenience the tip itself may be flattened or radiussed.

By way of example, reference will now be made to the accompanying drawings, in which:

Fig. 1 illustrates in schematic form a transverse cross-section through a wall surface formed in accordance with the invention, perpendicular to the flow direction over the surface, and

Figs. 2 to 7 illustrate a number of modifications that can be applied individually or in any combination to the configuration of Fig. 1.

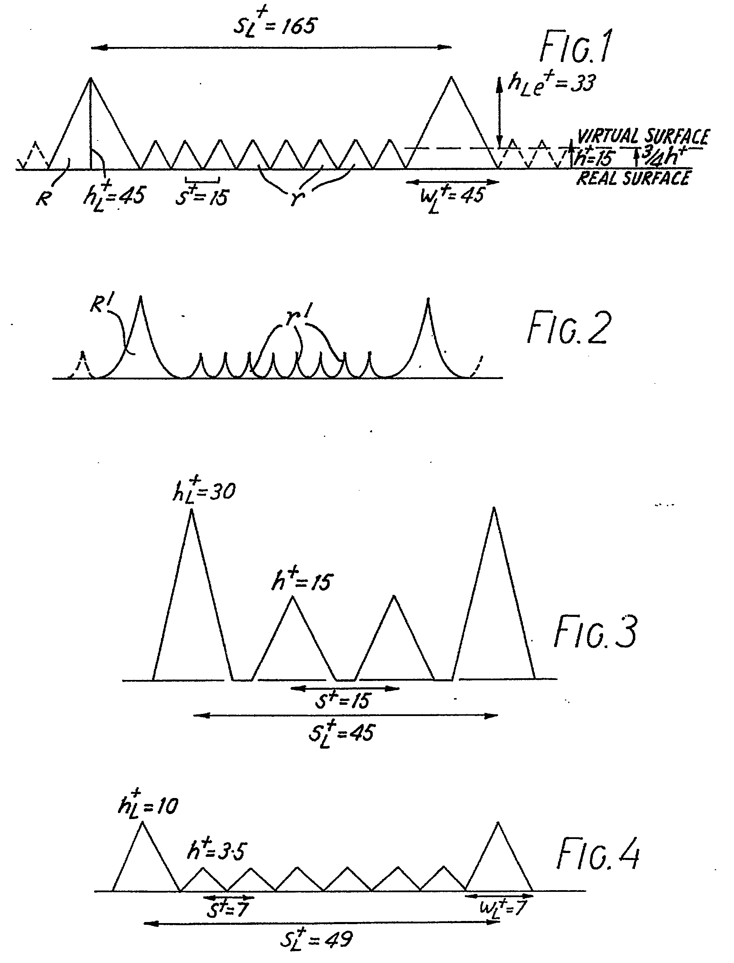

In Fig. 1, the wall surface is continuously ribbed in a regular pattern spanwise which constists of parallel groups of 8 uniform, smaller riblets r between individual larger riblets R, the riblets running in the stream direction over the surface in the turbulent boundary layer region, and preferably starting from the transition region of the flow over the surface. The pattern extending streamwise preferably continues over all the turbulent boundary layer area of the surface. It is not essential that the riblets be aligned precisely with the fluid stream and deviations of up to 10°–15° can be tolerated. The riblets are all shown with triangular profiles, but other profiles can be used, another preferred profile having a sharp-peaked form (apex included angle preferably not greater than about 20°) with concave valleys between successive peaks, as is illustrated with the riblets R', r' in Fig. 2. Furthermore, while Fig. 1 shows the riblets with base widths equal to their heights it may be preferred to increase the base widths to about twice the heights of the respective riblets; this is particularly relevant to cusp-shaped profiles shown in Fig. 2.

The preferred sizes and dimensional relationships of the riblets may be expressed in the non-dimensional form of so-called "law of the wall" variables, in which actual distance values are multiplied by a "wall unit" scalar quantity defined as:

$$\sqrt{\frac{\tau}{\varrho}} \Big/ \gamma$$

where   $\tau$   is the wall shear stress,

$\varrho$   is the fluid density, and

$\gamma$   is the fluid kinematic viscosity.

In the example, the smaller riblets r have a non-dimensionalised height $h^+$ of 15 units and are set at a pitch $s^+$ also fo 15 units. The larger riblets R are three times this size, with height $h_L{}^+$ and width $w_L{}^+$ at 45 units, giving a pitch $s_L{}^+$ of 165 units.

Because of the presence of the smaller riblets r, a virtual surface is established for the turbulent boundary layer flow some three-quarters of their height above the wall surface itself. The effective height ($h_{Le}{}^+$) of the larger riblets R, i.e. their height above the virtual surface, is therefore approximately 33 units. The larger riblets act in the region above the virtual surface to control the long regions of streamwise vorticity or streaks that form in the boundary layer by inhibiting their random spanwise movements, increasing their natural spanwise spacing, and encouraging the transfer of energy from the streaks to the smaller scale secondary vortices induced by the smaller riblets. In this flow mechanism, the actions of two forms of riblet reinforce each other in that the larger riblets influence the boundary layer to produce flow patterns which are associated with inherent reductions in drag and at the same time are more suited to manipulation by the smaller riblets, while the latter make their own contribution to the reduction of skin friction by moving the turbulent boundary layer flow some way up their height. It is also possible that the presence of the smaller riblets, by changing the virtual wall position, so reduces the wall shear stress that the streaks are weakened and are therefore more amenable to control.

Fig. 3 illustrates another riblet pattern which has only a pair of smaller riblets r between successive larger riblets R, and in which successive riblets are separated by flat valleys. In the particular example of Fig. 3, the smaller riblets have $h^+$ and $s^+$ each of 15 wall units. The larger riblets have a height $h_L{}^+$ of 30 units and their pitch $s_L{}^+$, which is of course the pattern repeat, is 45 units.

It may be preferred, especially when using rounded or flat-bottomed valley configurations as in Fig. 2 and 3, to reduce the heights of the smaller riblets in relation to their pitch. Fig. 4 illustrates an example with six smaller riblets r between successive larger riblets R, with $h^+ = \frac{1}{2}s^+ = 3.5$ wall units, $h_L{}^+ = 10$ units and $s_L{}^+ = 49$ units.

Many other variations of the sizes and profiles of the riblets are possible within the scope of the invention. The ratio h:s is preferably not substantially less than 1:2 nor substantially greater than 2:1 as regards the smaller riblets, although higher aspect ratios h:w can be more easily tolerated for the large riblets to the extent of giving them a blade-like profile. As far as concerns sizes, the following are the preferred size ranges in non-dimensional wall units for low speed flow:

for the smaller riblets r,

$2 \le h^+ \le 20$, and preferably $5 \le h^+ \le 15$

$6 \le s^+ \le 40$, and preferably $10 \le s^+ \le 20$

for the larger riblets R,

$8 \le h_{Le}{}^+ \le 45$, and preferably $15 \le h_{Le}{}^+ \le 35$

$40 \le s_L{}^+ \le 240$, and preferably $80 \le s_L{}^+ \le 160$

In general, the base width $w_L{}^+$ of the larger riblets will be kept to less than 60 wall units. Variations within the ranges specified may be made independently for each parameter but the larger riblets must of course project above the smaller riblets and a minimum projection of eight wall units is desirable. Furthermore, the relationship of $s^+$ to $s_L{}^+$ must always allow at least two smaller riblets to be interposed between successive larger riblets.

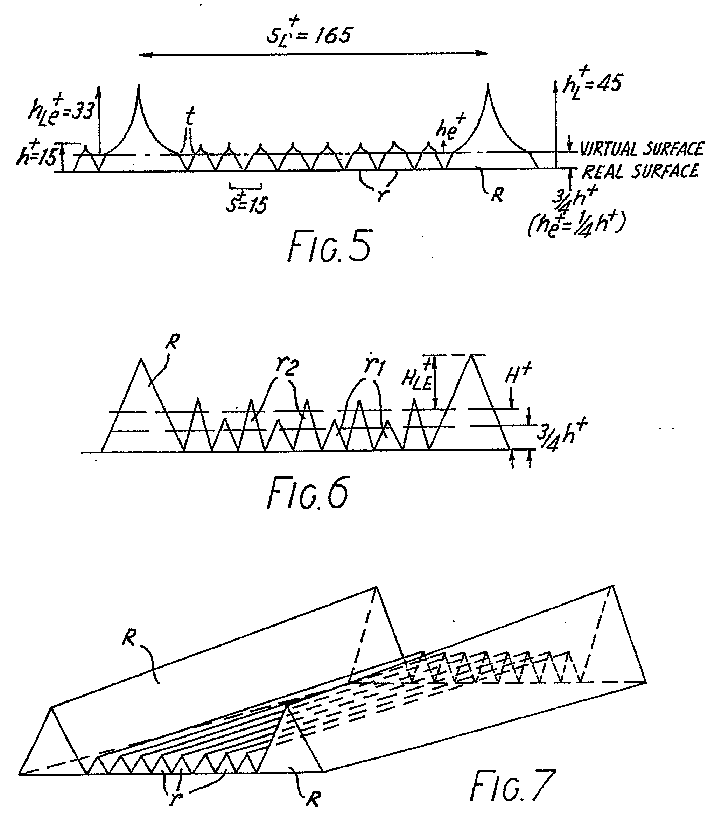

Fig. 5 illustrates another wall surface riblet pattern within the scope of the invention with modified riblet profiles. Like the example in Fig. 1, the smaller riblets r of this illustrative example have a nondimensionalised height $h^+$ of 15 units above the wall surface and are set at a pitch $s^+$ also of 15 units. The larger riblets R have a height $h_L{}^+$ and width $w_L{}^+$ of 45 units, so that their pitch $s_L{}^+$ is 165 units.

The smaller riblets r establish a virtual surface for the turbulent boundary layer flow some $\frac{3}{4}$ $h^+$ above the wall surface itself and below that level all the riblets have planar inclined side faces. At the level of the virtual surface there is a transition t to a smaller inclination and the riblets continue upwards from that point of inflection with concave side faces to a sharp-peaked tip, in analogy to the concave form of riblet illustrated in Fig. 2. Above the virtual wall surface, the larger riblets R have a height ($h_{Le}{}^+$) of 33 wall units, while the corresponding height ($h_e{}^+$) of the smaller riblets is 3 units.

The differently profiled regions are adapted to different functions. The regions below the virtual wall surface form the relatively deep V-grooves that are better able to inhibit penetration of turbulent eddy motions, while the concave faces above the virtual wall surface can more effectively promote very small scale longitudinal vortices which drain energy from the larger streaks in the turbulent boundary layer flow. To perform their functions effectively the concave faces should form relatively sharp-edged peaks.

It will be appreciated that the effects described can be achieved, at least in substance, with modified forms of the inclined side faces shown. In particular, it may be desirable for practical reasons to blunt the points of inflection or the peaks of the riblet faces; also, these faces may comprise straight and/or curved portions both below and above the virtual wall surface without unduly changing the general character of the profiles required for the functions described.

The number of smaller riblets between successive larger riblets can be greater or smaller than the group of 8 shown and the profiles of both series of riblets may be varied. If the larger riblets serve only to locate the streaks in position, their peaks may be flattened or rounded to reduce their inherent drag without affecting their function. If, however, they are employed to reduce the strength of the streaks, the top peaks will be retained and may be further emphasised by other changes of form. Similarly, the profile of the smaller riblets can be varied in accordance with their function.

It may improve performance, if, at their leading edges, the riblets are faired into the wall surface to avoid drag increments associated with the flow meeting a bluff leading face. For reducing wetted area it may also be possible to have short spanwise-extending gaps (less than the boundary layer thickness $\delta$ in the streamwise direction) between riblet areas (themselves greater than $2\delta$ in streamwise length) without sacrificing the advantages offered by the riblets.

Reference will be made here to the subject matter of our two simultaneously filed patent applications (published as EP-A 0 246 915 and EP-A 0246 916) since these other configurations can be employed jointly or separately in combination with that of this patent application. In EP-A 0 246 915 a reduction of the skin friction of a turbulent boundary layer is obtained by the use of a series of elongate projections disposed to a repeated spanwise pattern in which the adjacent projections in each pattern project to a different height. Such a configuration can be used in conjunction with the present invention, as is illustrated in Fig. 6, groups of the smaller height projections $r_1$, $r_2$ between successive larger projections R being given different heights so as to operate more effectively on the inner boundary layer region between larger projections and so gain a reduction in skin friction that is additional to that resulting from the presence of said larger projections. This concept may also be realised in a riblet pattern in which there are groups of adjacent uniform height projections between projections of two different heights, e.g. in the example of Fig. 6, all the projecitons $r_2$ save the central one in the pattern being replaced by smaller projections $r_1$, this last arrangement having the advantage that wetted area is reduced. To retain their functional effect, the exclusion of any of the intermediate length riblets should be limited to the extent that it does not leave any group of the smallest riblets with a span of more than 50 wall units.

The function of the groups of smaller projections of different height, as is described in that other application, is to displace the virtual wall surface further than is possible with uniform height smaller projections. The larger projections alternating with the groups of varying height smaller projections are intended to exercise the streak control functions described above. For that purpose they must extend significantly higher above the virtual wall surface than any of the smaller height projections. In Figure 6 the example is shown of two heights of small V-groove riblets $r_1$, $r_2$ in alternation, the smaller riblets $r_1$ of height $h^+$ establishing a virtual wall position 0.75 $h^+$ which is the datum for effective height of the intermediate height riblets $r_2$. If the effective height of the riblets $r_2$ is here termed $h_{le}^+$ in distinction from the effective height $h_{Le}^+$ of the larger riblets R described in relation to Figures 1 to 5, the new virtual wall position $H^+$ is at a height in the region of 0.75 $h_1^+$, that is to say,

$$0.75 (h_{le}^+ + 0.75\ h^+) \leq H^+ \leq (0.75\ h_{le}^+ + 0.75\ h^+)$$

The effective height $h_{LE}^+$ of the larger height riblets above the virtual wall position $H^+$ is at least 8 wall units greater, i.e. their height $h_L^+$ from the original wall surface is

$$\geq 8 + (0.75 (h_{le}^+ + 0.75\ h^+)$$

In EP-A 0 246 916 the elongate projections provided on a wall surface for modifying the turbulent boundary layer are given progressively increasing heights with distance along the wall surface in the direction of fluid flow, as is illustrated in Fig. 7. This can be done with the configurations of projections described above, whether they are composed of pluralities of uniformly smaller height projections between successive larger projections or whether the smaller projections are themselves of different heights at any particular station in the direction of the stream.

It will be understood that the other features disclosed in EP-A 0 246 915 and EP-A 0 246 916, but not directly referred to above, can be incorporated in any combination of the different configurations. Reference can be made directly to the published specifications for further details of the subject matter of those applications.

The riblet dimensions referred to above appear appropriate from the results of experiments carried out at relatively low free-stream velocities (U) and for Mach numbers (M) below about 0.3. However, it has been found that modification of the dimensions, in particular the riblet heights, is desirable for higher velocities and Mach Nos. It would appear that the streamwise length of the projections has a significant influence on the optimum dimensions especially at Mach Nos. greater than about 0.4 M. Wind tunnel tests with uniform arrays of single-height V-groove riblets having a streamwise length of about 1 metre exemplify the change of dimensions in terms of wall units that is required to give optimum results at higher velocities. The following table, giving the riblet dimensions at the leading edge of the riblets, puts the data from these tests (3), (4), (5) at Mach Nos. in the range of 0.4–0.9 M in context with previous low speed results (1), (2) in the range of 0.1 M:

Riblet height/span

|  | $h^+, s^+$ | $R_{eL}$ |
|---|---|---|
|  | wall units |  |
| (1) | 13 | $0.8 \times 10^6$ |
| (2) | 15 | $3 \times 10^6$ |
| (3) | 17 | $5 \times 10^6$ |
| (4) | 20 | $10 \times 10^6$ |
| (5) | 25 | $15 \times 10^6$ |

$R_{eL}$ being the length Reynolds $No = \dfrac{UL}{\nu}$, L being the length of the riblets.

These results indicate that for optimum effect, at the leading edge of the low speed riblets an increase of height in wall units of some 50% is required for a ten-fold increase of $R_{eL}$ relative to the low speed riblet height at $R_{eL} = 1 \times 10^6$.

The factors that determine the optimum are many and complex. The form of the underlying body, which may have streamwise and/or spanwise curvatures or discontinuities, and the possibility of non-uniform U values over the extent of a riblet array introduce further influences and an empirical evaluation of the optimum riblet dimensions may be necessary. For general purposes however, if the compensation for $R_{eL}$ is obtained by increasing the leasing edge height of the riblets, and possibly also their spacing, it is suggested that in relation to the lower speed values given in the discussion of the illustrated examples above, an appropriate scaling factor of the leading edge height of the riblets in wall units in relation to $R_{eL}$ ($h^+$:$R_{eL}$) should be in the range 1:20 to 1:6. It is also desirable to scale the increase of riblet dimensions along the length of the array irrespective of $R_{eL}$, as is discussed in more detail in our published patent application EP-A 0 246 916, filed simultaneously herewith.

The invention is generally applicable to the wall surfaces of bodies in which a reduction of skin friction is sought. It may thus provide a means of reducing drag on the external surfaces of vehicles, including aircraft, land vehicles and watercraft. It can also be used in machines, e.g. the blading, both rotating and stationary, of turbomachines, and for the internal surfaces of pipes and conduits. It will be understood that the invention includes the possibilities of forming the surface projections integrally with the bodies concerned and also of providing surface elements, e.g. as sheets or tapes, having the projections, for application to bodies to provide the required surface configurations thereon.

**Claims**

1. An aerodynamic or hydrodynamic wall surface which is provided with a series of elongate projections extending in the direction of fluid flow relative to the surface for modification of a turbulent boundary layer on said surface, characterised in that said projections comprise spaced larger height projections between each successive pair of which are a plurality of smaller height projections.

2. A surface according to claim 1 wherein the projections form a substantially continuous spanwise array.

3. A surface according to claim 1 or claim 2 wherein the projections extend streamwise at least over the length of the turbulent boundary layer region.

4. A surface according to any one of claims 1 to 3 wherein the smaller and/or the larger projections are sharp-peaked.

5. A surface according to any one of claims 1 to 4 wherein the projections have a V-form profile.

6. A surface according to any one of claims 1 to 4 wherein the projections have a profile which comprises concavely curved valleys between the peaks.

7. A surface according to any one of the preceding claims wherein flat-bottomed valleys are provided between at least some of the projections.

8. A surface according to any one of the preceding claims wherein the larger projections have an effective height of at least eight wall units above the smaller projections, wherein a wall unit is a dimensionless value comprising an actual distance value multiplied by a scalar quantity expressing the variation of wall shear stress with fluid density and viscosity.

9. A surface according to any one of the preceding claims wherein there are smaller projections of at least two different heights between successive large projections.

10. A surface according to any one of the preceding claims wherein the heights of the projections increase in the direction of fluid flow.

11. A surface according to any one of the preceding claims wherein at least the larger height projections have side faces that are inclined at an angle that varies over the height of the projections, each said side face having an intermediate region at a lesser steepness than the adjacent regions above and below said intermediate region and forming the lower part of a concave profile peak of the associated projection.

12. A surface according to claim 11 wherein all the projections extending above a virtual wall height have side walls of said varying inclination, with said intermediate region positioned substantially at the virtual wall height, said virtual wall height being the distance by which turbulence in the boundary layer is displaced away from the wall surface by said projections.

13. A surface according to any one of the preceding claims wherein there is at least one gap between lengths of said projections, each gap width in the direction of fluid flow not being greater than the boundary layer thickness.

14. A body having an aerodynamic or hydrodynamic wall surface provided with a series of projections according to any one of the preceding claims.

**Patentansprüche**

1. Aerodynamische oder hydrodynamische Wandoberfläche, die mit einer Reihe langgestreckter Vorsprünge versehen ist, die sich in Strömungsrichtung des Strömungsmittels relativ zur Oberfläche erstrecken, um eine turbulente Grenzschicht auf dieser Oberfläche zu modifizieren, dadurch gekennzeichnet, daß die Vorsprünge im Abstand zueinander liegende Vorsprünge größerer Höhe aufweisen und jeweils zwischen einem Paar dieser höheren Vorsprünge mehrere Vorsprünge geringerer Höhe verlaufen.

2. Oberfläche nach Anspruch 1, bei welcher die Vorsprünge eine im wesentlichen kontinuierlich in Spannrichtung verlaufende Anordnung bilden.

3. Oberfläche nach Anspruch 1 oder Anspruch 2, bei welcher die Vorsprünge sich in Strömungsrichtung wenigstens über die Länge des turbulenten Grenzschichtbereiches erstrecken.

4. Oberfläche nach einem der Ansprüche 1 bis 3, bei welcher die niedrigeren und/oder die höheren Vorsprünge einen scharfen Scheitel besitzen.

5. Oberfläche nach einem der Ansprüche 1 bis 4, bei welcher die Vorsprünge ein Profil mit V-Form aufweisen.

6. Oberfläche nach einem der Ansprüche 1 bis 4, bei welcher die Vorsprünge ein Profil besitzen, welches konkav gekrümmte Täler zwischen den Scheiteln aufweist.

7. Oberfläche nach einem der vorhergehenden Ansprüche, bei welcher Täler mit flachem Boden wenigstens zwischen einigen der Vorsprünge vorgesehen sind.

8. Oberfläche nach einem der vorhergehenden Ansprüche, bei welcher die größeren Vorsprünge eine effektive Höhe besitzen, die wenigstens acht Wandeinheiten ('wall units') über den niedrigeren Vorsprüngen liegen, wobei eine Wandeinheit ein dimensionsloser Wert ist, der einen tatsächlichen Entfernungswert multipliziert mit einer skalaren Größe darstellt, welche die Veränderung der Wandscherfestigkeit mit Strömungsmitteldichte und Viskose ausdrückt.

9. Oberfläche nach einem der vorhergehenden Ansprüche, bei welcher niedrigere Vorsprünge mit wenigstens zwei unterschiedlichen Höhenabmessungen zwischen aufeinanderfolgenden höheren Vorsprüngen vorgesehen sind.

10. Oberfläche nach einem der vorhergehenden Ansprüche, bei welcher die Höhe der Vorsprünge in Strömungsrichtung ansteigt.

11. Oberfläche nach einem der vorhergehenden Ansprüche, bei welcher wenigstens die höheren Vorsprünge Seitenflächen haben, die unter einem Winkel geneigt sind, der sich über die Höhe der Vorsprünge ändert, wobei jede Seitenfläche einen Mittelbereich mit geringerer Steilheit aufweist, als benachbarte Bereiche über und unter dem Mittelbereich und den unteren Teil eines konkaven Profil-Extremwertes des zugeordneten Vorsprungs bildet.

12. Oberfläche nach Anspruch 11, bei welcher sämtliche Vorsprünge sich über eine virtuelle Wandhöhe erstrecken, die Seitenwände variabler Neigung aufweisen, wobei der Zwischenbereich im wesentlichen in der virtuellen Wandhöhe liegt und die virtuelle Wandhöhe durch den Abstand definiert ist, um welchen die Turbulenz in der Grenzschicht von der Wandoberfläche durch die Vorsprünge weg versetzt wird.

13. Oberfläche nach einem der vorhergehenden Ansprüche, bei welcher wenigstens ein Spalt zwischen Längen der Vorsprünge vorgesehen ist, wobei jede Spaltweite in Strömungsrichtung nicht breiter ist als die Grenzschichtdicke.

14. Körper mit einer aerodynamischen oder hydrodynamischen Wandoberfläche, die mit einer Reihe von Vorsprüngen gemäß einem der vorhergehenden Ansprüche versehen ist.

## Revendications

1. Surface de paroi aérodynamique ou hydrodynamique qui est munie d'un série de reliefs allongés s'étendant dans la direction de l'écoulement du fluide par rapport à la surface pour modifier une couche limite turbulente sur ladite surface, caractérisée en ce que lesdits reliefs comportent des reliefs espacés de plus grande hauteur entre deux groupes adjacents qui sont constitués chacun par une pluralité de reliefs de hauteur plus faible.

2. Surface selon la revendication 1, dans laquelle les reliefs forment un ordre s'étendant sensiblement de façon continue sur toute l'envergure.

3. Surface selon la revendication 1 ou la revendication 2, dans laquelle les reliefs s'étendent dans le sens de l'écoulement au moins sur la longueur de la région de couche limite turbulente.

4. Surface selon une quelconque des revendications 1 à 3, dans laquelle les reliefs plus petits et/ou plus grands sont à arête vive.

5. Surface selon une quelconque des revendications 1 à 4, dans laquelle les reliefs ont un profil en forme de V.

6. Surface selon une quelconque des revendications 1 à 4, dans laquelle les reliefs ont un profil qui comporte des vallées concaves incurvées entre les pics.

7. Surface selon une quelconque des revendications précédentes, dans laquelle des vallées à fond plat sont prévues entre au moins certains des reliefs.

8. Surface selon une quelconque des revendications précédentes, dans laquelle les reliefs plus grands ont une hauteur effective d'au moins huit unités de paroi au-dessus des reliefs plus petits, où une unité de paroi est une valeur sans dimension comportant une valeur effective de distance multipliée par une quantité scalaire exprimant la variation de la contrainte de cisaillement de paroi avec la densité et la viscosité du fluide.

9. Surface selon une quelconque des revendications précédentes, dans laquelle il y a des reliefs plus petits de au moins deux hauteurs différentes entre les reliefs plus hauts adjacents.

10. Surface selon une quelconque des revendications précédentes, dans laquelle les hauteurs des reliefs croîssent dans la direction de l'écoulement du fluide.

11. Surface selon une quelconque des revendications précédentes, dans laquelle au moins les reliefs de plus grande hauteur ont des faces latérales qui sont inclinées sous un angle qui varie sur la hauteur des reliefs, chacune desdites faces latérales ayant une région intermédiaire à une raideur de pente moindre que les régions adjacentes supérieures et inférieures à ladite région intermédiaire et formant la partie inférieure d'un pic de profil concave du relief associé.

12. Surface selon la revendication 11, dans laquelle tous les reliefs s'étendant au-dessus d'une hauteur de paroi virtuelle ont des parties latérales avec ladite inclinaison variable, avec ladite région intermédiaire positionée sensiblement à la turbulence dans la couche limite est déplacée à l'écart de la surface de paroi par lesdits reliefs.

13. Surface selon une quelconque des revendications précédentes, dans laquelle il y a au moins un écart entre les longueurs desdits reliefs, chaque largeur d'écart en direction de l'écoulement du fluide n'étant pas plus grand que l'épaisseur de la couche limite.

14. Corps ayant une surface de paroi aérodynamique ou hydrodynamique munie d'une série de reliefs conformément à une quelconque des revendications précédentes.

FIG.1

$S_L^+ = 165$

$h_{Le}^+ = 33$

VIRTUAL SURFACE

$h^+ = 15$  $\frac{3}{4}h^+$

REAL SURFACE

$R$  $h_L^+ = 45$  $s^+ = 15$  $r$  $w_L^+ = 45$

FIG.2

$R'$  $r'$

FIG.3

$h_L^+ = 30$

$h^+ = 15$

$s^+ = 15$

$S_L^+ = 45$

FIG.4

$h_L^+ = 10$

$h^+ = 3.5$

$s^+ = 7$  $w_L^+ = 7$

$S_L^+ = 49$

$$S_L^+ = 165$$

$h_{Le}^+ = 33$

$t$

$h_L^+ = 45$

$h^+ = 15$

$he^+$

VIRTUAL SURFACE

REAL SURFACE

$r$

$R$

$\frac{3}{4}h^+$

$(he^+ = \frac{1}{4}h^+)$

$\overline{S^+ = 15}$

FIG. 5

$R$

$r_2$

$r_1$

$H_{LE}^+$

$H^+$

$\frac{3}{4}h^+$

FIG. 6

$R$

$r$

$R$

FIG. 7